# EUROPEAN PATENT SPECIFICATION

(11) **EP 3 050 470 B1**
(45) Date of publication and mention of the grant of the patent: **02.08.2017**
(21) Application number: 15201008.8
(22) Date of filing: 18.12.2015
(51) Int. Cl.: A47J 31/44, A47J 31/46

(54) **DEVICE FOR SLOWING DOWN AND KEEPING COMPACT THE FLOW OF A DRINK AT THE OUTLET OF A DISPENSER**
VORRICHTUNG ZUM VERLANGSAMEN UND HALTEN KOMPAKT DEN FLUSS VON EINEM DRINK AN DER AUSGANG EINES DISPENSERS
DISPOSITIF POUR RALENTIR ET MAINTENIR COMPACT LE FLUX DE BOISSON À LA SORTIE D'UN DISTRIBUTEUR

(30) Priority: 27.01.2015 IT MI20150094
(43) Date of publication of application: 03.08.2016
(73) Proprietor: Gruppo Cimbali S.p.A., 20082 Binasco (MI) (IT)
(72) Inventor: QUARATESI, Guido, 20082 Binasco MI (IT)
(74) Representative: Perani, Aurelio

(56) References cited:
- DE-B3-102006 049 894
- GB-A- 618 762
- GB-A- 2 104 625

## Description

The present invention relates to a device for slowing and keeping compact the flow of a beverage at the outlet orifice of the relevant dispensing conduit.

Particularly, the flow to which the device of the present invention refers is that of a milk-based beverage which is dispensed within a receiving container, with or without frothing, at room temperature or chilled or heated.

Devices for slowing the flow of a fluid substance at the outlet orifice of the relevant dispensing conduit are known.

They find wide application, for example, as aerator in taps for hydraulic installations where it is desired to slow down the outflow of liquid, such as hot or cold or mixed water, to avoid undesired splashes out of the collection area.

Known devices include a tubular body, connected to the outlet orifice of the dispenser, wherein plate-shaped elements are accommodated, provided with holes, or in the shape of a net, overlapping each other, crossed by the outcoming flow.

The fluid vein, beating on said pierced plate-shaped elements, is divided into a plurality of side by side fillets and its outflow speed is reduced compared to what it would be by crossing the free orifice.

Examples of such devices are described in GB 2 104 625 A, in FR 1 438 348 and in WO 2013/162359.

The structure of known devices, due to the multiplicity of its components, has the drawback of being difficult to be disassembled and reassembled quickly, making it impractical to use them when the flow is composed of substances which might soil the internal elements, forming deposits and incrustations and, therefore, requiring frequent cleaning, such as in the case of milk-based drinks.

An additional drawback that is found in known devices of the type mentioned above is the shower effect which is caused in the slowed flow which loses much of its compactness.

This effect, caused mainly by the structure and conformation of the elements accommodated in the tubular body connected to the outlet orifice, causes an unsatisfactory operation of known devices in application to flows of milk-based beverages, particularly when the beverage is dispensed frothed and the flow has a compact creamy consistency that must not be modified during the outlet from the orifice of the dispenser, even the speed has been slowed down.

The problem that underlies the present invention therefore is to provide a device for slowing the flow of a beverage coming out of a dispenser which is quick and easy to disassemble and reassemble for cleaning its components and which at the same time, does not affect the compactness of the flow, especially when this is a drink made of frothed milk.

The problem is solved with a device which is characterized according to the following claim 1.

The invention will now be better described with reference to an example of practical embodiment shown in the accompanying drawings, in which:
- figure 1 is a sectional view of a device according to the invention mounted on the outlet orifice of a dispenser for beverages;

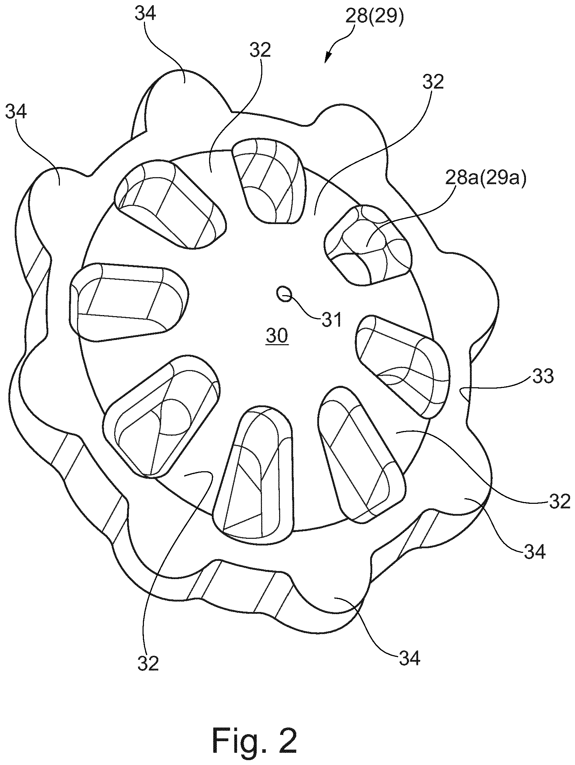

- figure 2 shows a perspective view of the aerator plate-shaped element provided with openings, to be used in the device according to the invention;
- figure 3 shows a perspective, partly sectional view of the support of the aerator plate-shaped elements;
- figure 4 shows a perspective, partially sectional view of the aerator element group inside the device, mounted on the support sleeve.

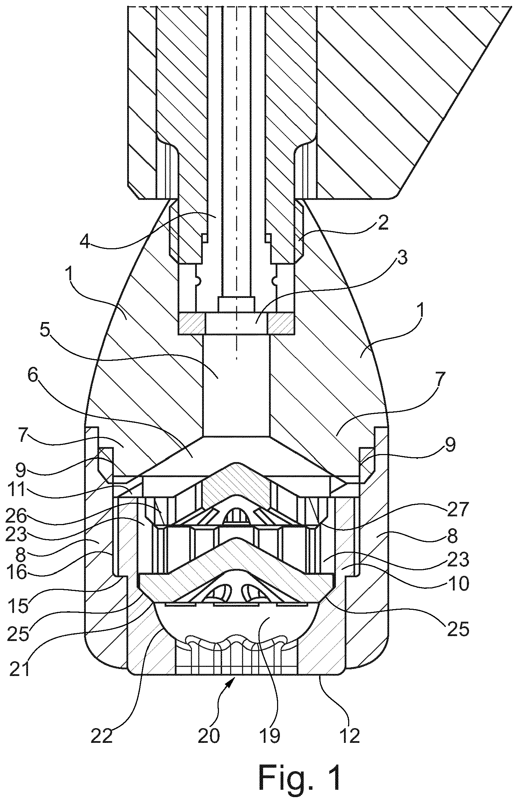

With reference to said figures, and in particular to figure 1, it is seen that the device according to the invention comprises a bulb-shaped body 1 which, through a thread 2, is reversibly connected to the outlet orifice 3 of a dispensing conduit from which a beverage comes out, preferably made from milk, prepared in the machine, not shown, to which conduit 4 is connected in a conventional manner.

Bulb 1 is axially crossed by a conduit 5 directly in fluid communication with orifice 3 ending in a conical enlargement 6 open towards a complex of elements that will be described hereinafter and that cause the slowing of the flow of the beverage coming from the dispensing conduit 4 without changing its compactness.

The free end 7 of bulb 1 is connected to a tubular body 8 via a thread 9 which allows the quick mounting and dismounting thereof. A tubular sleeve 10 positioned within the tubular body 8, with a first end 11 and a second end 12, the first end being proximal to orifice 3 of conduit 4 while the second end 12 is distal to said orifice 3.

Said tubular sleeve 10 is open at both ends 11 and 12 thereof and, through an annular step 13 formed on the outer wall 14, leans on an annular abutment 15 formed on the inner wall 16 of body 8.

Sleeve 10 includes a first cylindrical cavity 17, with circular section, and a second cylindrical cavity 18, coaxial to the first one and communicating therewith.

The first cylindrical cavity 17, with circular cross section, extends axially from the first end 11 of the tubular sleeve 10 up to a terminal line 21, halfway between the first end 11 and the second end 12 of said sleeve 10.

The second cavity 18 extends from said terminal line 21 of the first axial cavity 17 to the second end 12 of said sleeve 10.

Said second cylindrical cavity 18 is provided with a cross wall 19 in its end coincident with end 12 of sleeve 10. Such a wall 19 is provided with an opening 20 which has a diameter smaller than the diameter of the first cylindrical cavity 17 of sleeve 10.

The cross wall 19 of the second cylindrical cavity is jointed to the terminal line 21 of the first cylindrical cavity 17, with a stretch of arched surface 22.

The inner wall of the first cylindrical cavity 17 is provided with multiple axial grooves 23 alternating with a plurality of ribs, which are also axial 24 and distributed on the whole tubular surface.

Each groove 23 is open at end 11 of sleeve 10 and ends, at the terminal line 21 of cavity 17, with a respective abutment 25.

Preferably, abutment 25 is inclined towards the central axis of sleeve 10.

Each axial rib 24 is provided with a respective recess 26, open in the axial direction in which grooves 23 are open and closed on the bottom with an abutment 27 which is axially spaced upstream with respect to the terminal line 21 of said first cavity 17.

Also the bottom abutments of recesses 26 are preferably inclined towards the central axis of sleeve 10.

The bottom abutments 25 of grooves 23 are each angularly displaced relative to the bottom abutments 27 of recesses 26 since the latter are on ribs 24 that alternate with grooves 23.

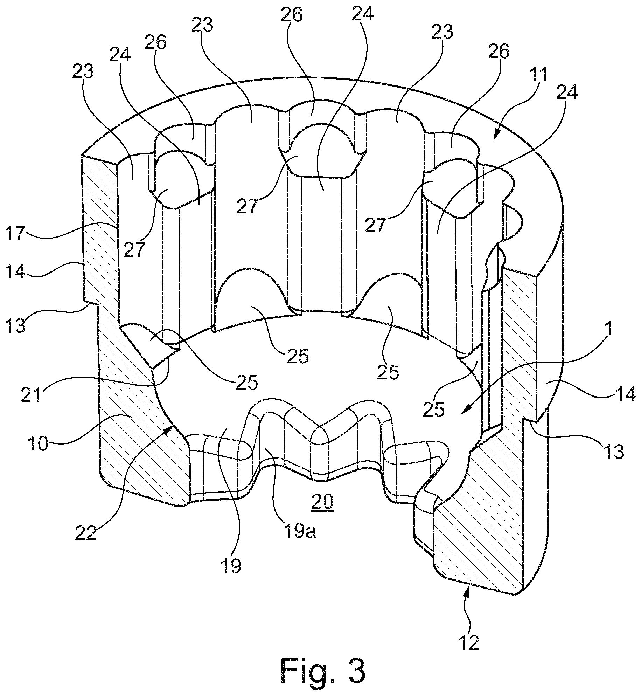

Preferably, the outline of opening 20 formed into wall 19 is provided with undulations as those indicated with 19a in figure 3 or, alternatively, it may have a smooth surface.

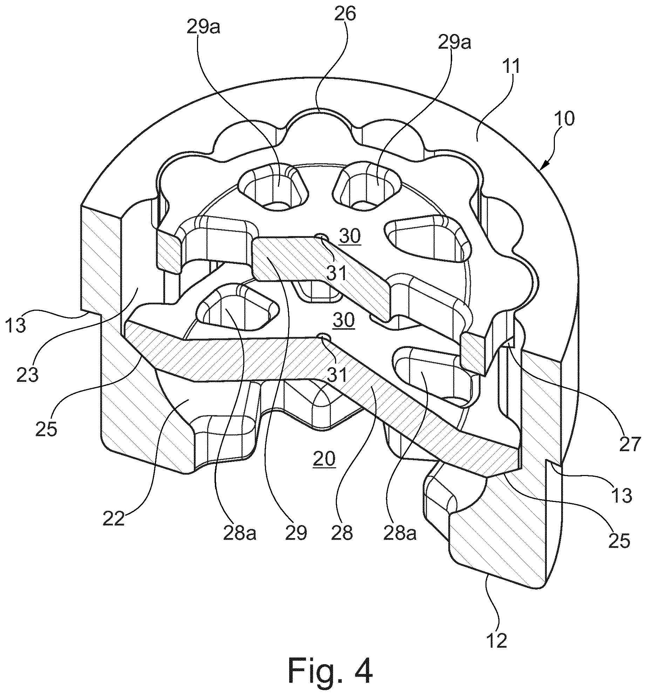

With particular reference to figures 1 and 4, it is noted that the device according to the invention includes a first plate-shaped element 28 and a second plate-shaped element 29, provided with respective openings 28a and 29a.

The plate-shaped element 28 is accommodated within the tubular sleeve 10 in the seat defined by abutments 25 of grooves 23 while the plate-shaped element 29 is accommodated within sleeve 10 into the seat defined by the bottom abutments 27 of recesses 26 of ribs 24 which, as mentioned above, are radially displaced with respect to abutments 25.

Openings 28a and 29a therefore are non-aligned axially and define a winding axial path which causes a slowing of the flow speed of the beverage running through it during the dispensing.

The plate-shaped elements 28 and 29 are preferably equal to each other and their structure includes a central body 30, preferably cone-shaped, whose top 31, when elements 28 and 29 are positioned into the support sleeve 10, faces orifice 3 of the dispensing conduit 4 from which the flow of the beverage comes.

A plurality of spokes 32 branches off the central body 30, delimiting openings 28a or 29a and which are connected to a peripheral ring 33 delimiting the plate-shaped element.

Each spoke 32 extends beyond the peripheral ring 33 with respective radial projections 34 having transverse dimensions corresponding to the transverse ones of said grooves 23 and of recesses 24.

These projections, in addition to allowing the guided, sliding and reversible insertion of each plate-shaped element into grooves 23 or recesses 26, cause the positioning of elements 28 and 29 in the respective seats within the tubular sleeve 10 since they lean against abutments 25 and 27.

From the above description made with reference to the drawings it can be seen that during the dispensing of a beverage, especially if it is frothed milk-based, the flow from conduit 4 reaches orifice 3 with a normally high speed as a result of the fact that conduit 4 has a small diameter, normally between 1.5 and 2.5 mm.

If the dispensed beverage was received directly in the receiving container, such as a conventional 15-20 cc cup, the excessive flow speed would cause undesired splashes of beverage out of the receiving container.

With the device according to the invention, the flow speed is slowed due to the passage of the plate-shaped elements 28 and 29 between openings 28a, 29a, mutually radially staggered and axially spaced apart.

Despite the outflow speed slowing, the compactness of the creamy flow of the frothed milk is maintained, due in particular to the function carried out by the second cylindrical cavity 18 and to the curved configuration of surface 22 of connection with the first cylindrical cavity 17.

The undulated profile of the contour of opening 20, if required, shapes the creamy product that is collected in the cup.

As can be appreciated, the structural elements that make up the device according to the invention are basically reduced to the tubular sleeve 10, to the pair of plate-shaped elements 28 and 29 and to the tubular body 8 connected to bulb 1.

They are quickly disassembled and reassembled for washing and cleaning.

The invention may be subjected to changes and construction variants, all deemed as falling within the scope of the invention as described above and claimed hereinafter.

## Claims

1. Device for slowing and keeping compact the flow of a beverage at the outlet orifice (3) of the corresponding dispensing conduit (4), comprising a tubular body (8), removably connected to said dispensing conduit (4) in axial extension thereof, as well as a plurality of plate-shaped elements (28, 29), each provided with openings, accommodated within said body (8), overlapped and axially spaced apart from each other, wherein said device further comprises a tubular sleeve (10), positioned coaxially within said tubular body (8), with a first (11) and a second (12) end, the first end (11) being proximal to the orifice (3) of the conduit (4) and the second end (12) being distal to said orifice (3), said tubular sleeve (10) being provided therein with a first seat (25) for the positioning of a first plate-shaped element (28) provided with openings and a second seat (27) for the positioning of a second plate-shaped element (29) provided with openings, said first and said second seats being angularly displaced relative to each other.

2. Device according to claim 1, **characterized in that** said tubular sleeve (10) has a first cylindrical cavity (17), with circular cross section, said first cavity (17) being axially extended from the first end (11) of the tubular sleeve (10) up to a terminal line (21), intermediate between the first end (11) and the second end (12) of said sleeve (10), and being provided with a plurality of axial grooves (23), separated by intermediate axial ribs (24), formed on the inner wall of the cavity, said grooves (23) being open at their axial end next to the first open end (11) of said tubular sleeve (10) and provided with a respective bottom abutment (25) at their opposite end which is next to the terminal line (21) of the axial extension of said first cavity (17).

3. Device according to claims 1 and 2, **characterized in that** said intermediate axial ribs (24) are provided with a respective recess (26), which is open in the axial direction in which said grooves (23) are open, and closed on the bottom with an abutment (27) positioned axially spaced upstream with respect to said terminal line (21) of said first cavity (17).

4. Device according to claim 3, **characterized in that** said recesses (26) and said grooves (23) have substantially equal cross dimensions relative to their axial extension.

5. Device according to any one of claims 1 to 4, **characterized in that** each of said plate-shaped elements (28, 29) with openings (28a, 29a) have a circular profile and are provided with radial projections (34) with dimensions corresponding to the cross dimensions of said grooves (23) and said recesses (24) adapted to allow a reversible sliding axial insertion and the positioning of a plate-shaped element (28, 29) in either one (25) or the other seat (27) of the tubular sleeve (10).

6. Device according to any one of claims 1 to 5, **characterized in that** said tubular sleeve (10) comprises a second cylindrical cavity (18) coaxial to the first one (17) and communicating therewith, said second cavity (18) being extended from said terminal line (21) of the first axial cavity (17) to the second end (12) of said sleeve (10) and being provided, at its end coinciding with the end (12) of said sleeve (10), with a transverse wall (19) with an opening (20) having a smaller diameter than the inner one of said first cavity (17).

7. Device according to claim 6, **characterized in that** the profile of the opening (20) of the transverse wall (19) of said second cylindrical cavity (18) has a plurality of undulations.

8. Device according to claim 6, **characterized in that** said transverse wall (19) of said second cavity (18) is jointed to said terminal line (21) of said first cavity (17) through a stretch (22) of arched surface. 8,

9. Device according to any one of claims 1 to 8, **characterized in that** said plate-shaped elements (28, 29) with openings are cone shaped and are positioned in the seats (25, 27) of the support sleeve (10) with the convex surface (30) facing towards the conduit (4) from which the flow of the beverage comes out.

10. Device according to any one of claims 1 to 9, **characterized in that** the flow of the beverage is made of frothed milk.

## Patentansprüche

1. Vorrichtung zum Verlangsamen und Kompakthalten des Durchflusses eines Getränks an der Auslaufmündung (3) der entsprechenden Ausgabeleitung (4), umfassend einen rohrförmigen Körper (8), der abnehmbar mit der Ausgabeleitung (4) in axialer Ausdehnung derselben verbunden ist, sowie eine Mehrzahl von plattenförmigen Elementen (28, 29), die jeweils mit Öffnungen versehen und innerhalb des Körpers (8) überlappend und axial voneinander beabstandet untergebracht sind, wobei die Vorrichtung ferner eine rohrförmige Hülse (10) umfasst, die koaxial innerhalb des rohrförmigen Körpers (8) angeordnet ist, mit einem ersten (11) und einem zweiten (12) Ende, wobei das erste Ende (11) sich proximal zur Mündung (3) der Leitung (4) befindet und das zweite Ende (12) sich distal zur Mündung (3) befindet, wobei die rohrförmige Hülse (10) darin versehen ist mit einem ersten Sitz (25) zum Positionieren eines ersten plattenförmigen Elements (28) mit Öffnungen und einem zweiten Sitz (27) zum Positionieren eines zweiten plattenförmigen Elements (29) mit Öffnungen, wobei der erste und der zweite Sitz winkelversetzt zueinander angeordnet sind.

2. Vorrichtung nach Anspruch 1, **dadurch gekennzeichnet, dass** die rohrförmige Hülse (10) einen ersten zylindrischen Hohlraum (17) mit einem kreisförmigen Querschnitt aufweist, wobei der erste Hohlraum (17) sich axial von dem ersten Ende (11) der rohrförmigen Hülse (10) bis zu einer Anschlussleitung (21) erstreckt, die zwischen dem ersten Ende (11) und dem zweiten Ende (12) der Hülse (10) angeordnet und mit einer Mehrzahl von axialen Rillen (23) versehen ist, die durch axiale Zwischenrippen (24) getrennt sind, die auf der inneren Wand des Hohlraums gebildet sind, wobei die Rillen (23) an ihrem axialen Ende, nahe dem ersten offenen Ende (11) der rohrförmigen Hülse (10) offen sind und mit einem jeweiligen Bodenanschlag (25) an ihrem entgegengesetzten Ende versehen sind, das sich nahe der Anschlussleitung (21) der axialen Erstreckung des ersten Hohlraums (17) befindet.

3. Vorrichtung nach Anspruch 1 und 2, **dadurch gekennzeichnet, dass** die axialen Zwischenrippen (24) mit einer jeweiligen Aussparung (26) versehen sind, die in der axialen Richtung offen ist, in der die Rillen (23) offen sind, und am Boden mit einem Anschlag (27) geschlossen sind, der stromaufwärts in Bezug auf die Anschlussleitung (21) des ersten Hohlraums (17) axial beabstandet angeordnet ist.

4. Vorrichtung nach Anspruch 3, **dadurch gekennzeichnet, dass** die Aussparungen (26) und die Rillen (23) im Wesentlichen gleich große Querabmessungen relativ zu ihrer axialen Erstreckung aufweisen.

5. Vorrichtung nach einem der Ansprüche 1 bis 4, **dadurch gekennzeichnet, dass** jedes der plattenförmigen Elemente (28, 29) mit Öffnungen (28a, 29a) ein kreisförmiges Profil aufweist und mit radialen Auskragungen (34) versehen ist, deren Abmessungen den Querabmessungen der Rillen (23) entsprechen, und die Aussparungen (24) dazu geeignet sind, ein reversibles, axiales gleitendes Einsetzen und das Positionieren eines plattenförmigen Elements (28, 29) entweder in den einen (25) oder den anderen Sitz (27) der rohrförmigen Hülse (10) zu ermöglichen.

6. Vorrichtung nach einem der Ansprüche 1 bis 5, **dadurch gekennzeichnet, dass** die rohrförmige Hülse (10) einen zweiten zylindrischen Hohlraum (18) umfasst, der koaxial zum ersten (17) angeordnet ist und mit diesem in Verbindung steht, wobei der zweite Hohlraum (18) sich von der Anschlussleitung (21) des ersten axialen Hohlraums (17) zum zweiten Ende (12) der Hülse (10) erstreckt und an seinem Ende, das mit dem Ende (12) der Hülse (10) zusammenfällt, mit einer Querwand (19) versehen ist, die eine Öffnung (20) aufweist, deren Durchmesser kleiner als der Innendurchmesser des ersten Hohlraums (17) ist.

7. Vorrichtung nach Anspruch 6, **dadurch gekennzeichnet, dass** das Profil der Öffnung (20) der Querwand (19) des zweiten zylindrischen Hohlraums (18) eine Mehrzahl von Wellungen aufweist.

8. Vorrichtung nach Anspruch 6, **dadurch gekennzeichnet, dass** die Querwand (19) des zweiten Hohlraums (18) an die Anschlussleitung (21) des ersten Hohlraums (17) durch einen Abschnitt (22) mit gebogener Oberfläche angelenkt ist.

9. Vorrichtung nach einem der Ansprüche 1 bis 8, **dadurch gekennzeichnet, dass** die plattenförmigen Elemente (28, 29) mit Öffnungen kegelförmig sind und in den Sitzen (25, 27) der Traghülse (10) mit der konvexen Oberfläche (30) angeordnet sind, die zu der Leitung (4) gerichtet ist, aus der der Getränkestrahl austritt.

10. Vorrichtung nach einem der Ansprüche 1 bis 9, **dadurch gekennzeichnet, dass** der Getränkestrahl aus Milchschaum besteht.

## Revendications

1. Dispositif pour ralentir ou maintenir compact le flux d'une boisson au niveau de l'orifice de sortie (3) du conduit de distribution (4) correspondant, comprenant un corps tubulaire (8), connecté de manière amovible audit conduit de distribution (4) dans un prolongement axial de celui-ci, ainsi qu'une pluralité d'éléments en forme de plaque (28, 29), chacun muni d'ouvertures, logés dans ledit corps (8), superposés et espacés axialement l'un de l'autre, dans lequel ledit dispositif comprend en outre un manchon tubulaire (10), positionné de manière coaxiale à l'intérieur dudit corps tubulaire (8), avec une première (11) et une deuxième (12) extrémité, la première extrémité (11) étant proximale à l'orifice (3) du conduit (4) et la deuxième extrémité (12) étant distale par rapport audit orifice (3), ledit manchon tubulaire (10) étant pourvu à l'intérieur d'un premier siège (25) pour le positionnement d'un premier élément en forme de plaque (28) muni d'ouvertures et d'un deuxième siège (27) pour le positionnement d'un deuxième élément en forme de plaque (29) muni d'ouvertures, lesdits premier et deuxième sièges étant décalés angulairement l'un par rapport à l'autre.

2. Dispositif selon la revendication 1, **caractérisé en ce que** ledit manchon tubulaire (10) a une première cavité cylindrique (17), avec section transversale circulaire, ladite première cavité (17) étant étendue axialement de la première extrémité (11) du manchon tubulaire (10) jusqu'à une ligne terminale (21), intermédiaire entre la première extrémité (11) et la deuxième extrémité (12) dudit manchon (10), et étant munie d'une pluralité de rainures axiales (23), séparées par des nervures axiales intermédiaires (24), formées sur la paroi intérieure de la cavité, lesdites rainures (23) étant ouvertes à leur extrémité axiale proche de la première extrémité ouverte (11) dudit manchon tubulaire (10) et munies d'une butée inférieure respective (25) à leur extrémité opposée qui est proche de la ligne terminale (21) de l'extension axiale de ladite première cavité (17).

3. Dispositif selon les revendications 1 et 2, **caractérisé en ce que** lesdites nervures axiales intermédiaires (24) sont munies d'un évidement respectif (26), qui est ouvert dans la direction axial dans laquelle lesdites rainures (23) sont ouvertes, et fermé sur le fond avec une butée (27) positionnée espacée axialement en amont par rapport à ladite ligne terminale (21) de ladite première cavité (17).

4. Dispositif selon la revendication 3, **caractérisé en ce que** lesdits évidements (26) et lesdites rainures (23) ont des dimensions transversales sensiblement égales par rapport à leur extension axiale.

5. Dispositif selon l'une quelconque des revendications 1 à 4, **caractérisé en ce que** chacun desdits éléments en forme de plaque (28, 29) munis d'ouvertures (28a, 29a) ont un profil circulaire et sont munis de saillies radiales (34) avec des dimensions correspondant aux dimensions transversales desdites rainures (23) et lesdits évidements (24) adaptés pour permettre une insertion axiale par coulissement réversible et le positionnement d'un élément en forme de plaque (28, 29) dans l'un (25) ou l'autre siège (27) du manchon tubulaire (10).

6. Dispositif selon l'une quelconque des revendications 1 à 5, **caractérisé en ce que** ledit manchon tubulaire (10) comprend une deuxième cavité cylindrique (18) coaxiale à la première (17) et communiquant avec celle-ci, ladite deuxième cavité (18) étant étendue de ladite ligne terminale (21) de la première cavité axiale (17) à la deuxième extrémité (12) dudit manchon (10) et étant munie, à son extrémité coïncidant avec l'extrémité (12) dudit manchon (10), d'une paroi transversale (19) avec une ouverture (20) ayant un diamètre plus petit que celui intérieur de ladite première cavité (17).

7. Dispositif selon la revendication 6, **caractérisé en ce que** le profil de l'ouverture (20) de la paroi transversale (19) de ladite deuxième cavité cylindrique (18) a une pluralité d'ondulations.

8. Dispositif selon la revendication 6, **caractérisé en ce que** ladite paroi transversale (19) de ladite deuxième cavité (18) est unie à ladite ligne terminale (21) de ladite première cavité (17) par le biais d'une portion (22) de surface cintrée.

9. Dispositif selon l'une quelconque des revendications 1 à 8, **caractérisé en ce que** lesdits éléments en forme de plaque (28, 29) munis d'ouvertures sont de forme conique et sont positionnés dans les sièges (25, 27) du manchon de support (10) avec la surface convexe (30) faisant face vers le conduit (4) à partir duquel le flux de boisson sort.

10. Dispositif selon l'une quelconque des revendications 1 à 9, **caractérisé en ce que** le flux de boisson est constitué de lait moussé.
